# EUROPEAN PATENT APPLICATION

(11) **EP 4 421 027 A1**
(43) Date of publication of application: **28.08.2024**
(21) Application number: 23158061.4
(22) Date of filing: 22.02.2023
(51) Int. Cl.: C01B 3/38, C01B 3/48

(54) **METHOD FOR PRODUCING AMMONIA WITH REDUCED EMISSIONS AND SYSTEM THEREOF**

(71) Applicant: Yara Clean Ammonia AS, 0277 Oslo (NO)
(72) Inventor: GHAFOOR, Faisal, 3090 Overijse (BE); ROMBAUT, Emma, 9000 Gent (BE)
(74) Representative: De Clercq & Partners

(57) **Abstract**

Process for the synthesis of ammonia from natural gas comprising conversion of a charge of desulphurized natural gas and steam, with oxygen-enriched air or oxygen, into a first synthesis gas, and treatment of the first synthesis gas with shift reaction, thereby providing a second synthesis gas, and decarbonation, wherein a part of the first synthesis gas or the second synthesis gas obtained from the shift reaction, is separated and used as fuel for one or more furnaces of the conversion section, and the remaining part of the gas is used to produce ammonia.

## Description

### FIELD OF THE INVENTION

The disclosure relates to the field of ammonia production with reduced emissions from the fuel section.

### BACKGROUND

The ammonia synthesis plants of the type considered here comprise a section adapted to convert the natural gas into a make-up gas containing hydrogen and nitrogen, and a synthesis section wherein the make-up gas reacts catalytically at high pressure to produce ammonia.

The section which generates the make-up gas is referred to in the technical language as the "front end". The term "back end" is instead used to denote the section for ammonia synthesis and the respective cooling section intended to cool the effluent of the synthesis section in order to separate the ammonia.

In the front end, the desulphurized natural gas undergoes reforming, resulting in a gas containing essentially hydrogen, carbon monoxide CO and carbon dioxide CO₂. The gas then undergoes a shift reaction which converts CO into CO₂; removal of CO₂ (decarbonation) and preferably methanation.

The reforming process, in a common type of plant, comprises primary steam reforming and a subsequent catalytic air-fired secondary reforming. The primary reformer is heated by burners fueled by a part of the available natural gas. In the secondary reformer the effluent from the primary reformer burns due to contact with the oxygen contained in the air. In some plants other reforming configurations are used, for example an autothermal reformer (ATR) preceded by a furnace for heating the charge, i.e. the gaseous mixture fed to the reformer.

The above-described ammonia plants result in significant emissions of CO₂ into the atmosphere, overall in the region of 100 million tons of CO₂ per year. One of the main sources of CO₂ emission consists in the combustion fumes of the primary reformer and other burner furnaces if any, for example auxiliary heaters.

For environmental reasons, it is required to minimize the CO₂ emissions from the fumes of the NH3 plants. The problem affects in particular the older ammonia plants which are less efficient than the new ones and have greater CO₂ flue emissions in relation to the quantity of ammonia produced. It is also necessary that the reduction of the emissions should not increase excessively the costs for production of the ammonia.

According to the present state of the art, the processes for capturing CO₂ from fumes are based on washing with solvents (for example the solvent KS-1 ^{™} produced by Mitsubishi). The associated plants are, however, costly and complicated, have a high energy consumption and require expensive solvent. Therefore, these CO₂ capturing processes cannot be applied to the plants considered here since they would increase excessively the costs for production of the ammonia.

In some ammonia synthesis processes of the prior art, part of the fuel may be supplied by a purge flow obtained, for example, from a cryogenic purification section of the synthesis gases or from a PSA unit. The purge flow may have a reduced CO₂ content. However, the purge flow accounts for a small amount of the total fuel and does not solve the problem of the CO₂ emissions in the atmosphere.

In US11286168B2 (Casale, 2018), it is described a process for the synthesis of ammonia from natural gas comprising conversion of a charge of desulphurized natural gas and steam, with oxygen-enriched air or oxygen, into a synthesis gas, and treatment of the synthesis gas with shift reaction and decarbonation, wherein a part of the COz-depleted synthesis gas, obtained after decarbonation, is separated and used as fuel fraction for one or more furnaces of the conversion section, and the remaining part of the gas is used to produce ammonia.

The goal of the present disclosure is to allow for the production of ammonia at reduced emissions from the fuel section, while also allowing the efficiency of the hydrogen production process, especially at the shift conversion and/or the CO₂ removal units.

### SUMMARY

In one aspect of the disclosure, a process for synthesis of ammonia from natural gas is disclosed. The process comprises:
(i) conversion of a charge of desulphurized natural gas and steam, with air, oxygen-enriched air or with oxygen, in a conversion section into a first synthesis gas, the first synthesis gas containing hydrogen, CO and CO₂, and the conversion section comprising at least one furnace;
(ii) subjecting the first synthesis gas to a shift reaction of the carbon monoxide into CO₂, in a shift conversion unit, thereby obtaining a second synthesis gas, and subsequent separation of CO₂ from the second synthesis gas in a CO₂ removal unit, thus obtaining a CO₂-depleted synthesis gas and a COz-rich gaseous flow containing the CO₂ separated from the gas; and (iiia) separation of H₂ from CO and CO₂ in the first synthesis gas through permeation over a first membrane, thus obtaining a first hydrogen-rich gaseous stream and a first hydrogen-depleted gaseous flow; and/or (iiib) separation of H₂ from CO and CO₂ in the second synthesis gas over a second membrane, thus obtaining a second hydrogen-rich gaseous stream and a second hydrogen-depleted gaseous flow.

The process is characterised in that the first or second hydrogen-rich gaseous flow is fed as fuel to at least one furnace in the conversion section, and the first or second hydrogen-depleted gaseous flow are treated in the shift conversion unit or the CO₂ removal unit, respectively.

In one embodiment according to the process of the disclosure, the process further comprises the step of providing the COz-depleted synthesis gas to an ammonia synthesis unit after further purification.

The inventor has realised that the use of a membrane allows for the separation of the hydrogen gas component, from the carbon monoxide gas in the gaseous stream to enter the shift conversion unit, or from the carbon dioxide in the gaseous stream leaving the shift conversion unit. This separation of the hydrogen gas can be performed on at least a part of the gaseous stream entering the shift conversion unit, or on at least part of the gaseous stream leaving the shift conversion unit. In this manner, a gas stream concentrated in hydrogen and the flow of which is controlled, can be produced and controlled such as to provide fuel to a furnace of the conversion section. Not only is a hydrogen-rich gaseous stream produced, but also is a carbon-monoxide rich, or concentrated, stream produced when the gaseous stream to enter the shift conversion unit is thereby separated through permeation. In this manner, with an increased concentration of carbon monoxide and a reduced hydrogen concentration of the stream treated in the shift conversion unit, the chemical equilibrium is positively shifted in order to favour the conversion of carbon monoxide into CO₂ and H₂, thereby increasing the efficiency of the shift reaction. Further, not only is a hydrogen-rich gaseous stream produced, but also is a carbon-dioxide rich, or concentrated, stream produced when the gaseous stream leaving the shift reaction unit and to enter the carbon dioxide removal unit is thereby separated through permeation. In this manner, with an increased concentration of carbon dioxide, the chemical equilibrium is positively shifted in order to favour the removal of carbon dioxide, thereby increasing the efficiency of the carbon dioxide removal process. Hence, the presence disclosure provides a method for not only reducing CO₂ emissions from the fuel section of an ammonia production plant, it further discloses how to do so while at the same time increasing the efficiency of the front end of the ammonia production plant, where hydrogen gas is produced.

In one embodiment according to the process of the disclosure, each of the first or second hydrogen-rich gaseous stream is between 1% and 40% of the total amount of first and second synthesis gas, respectively, more in particular each of the first or second hydrogen-rich gaseous stream is between 10% and 30%, even more in particular between 5% and 15% of the total amount of the first and second synthesis gas, respectively.

In one embodiment according to the process of the disclosure, the process further comprises a step for methanation of the COz-depleted synthesis gas and/or addition of nitrogen to the COz-depleted synthesis gas.

In one embodiment according to the process of the disclosure, wherein the first hydrogen-rich gaseous stream comprises at least 95% by volume hydrogen, and/or wherein the second hydrogen-rich gaseous stream comprises at least 95% by volume hydrogen.

In one embodiment according to the process of the disclosure, the enriched air contains at least 50% oxygen, particularly wherein the enriched air contains at least 90% oxygen.

In one embodiment according to the process of the disclosure, the first or second hydrogen-rich gaseous stream feeds one or more of the following apparatuses: a steam production and/or superheating furnace; one or more burners of a primary steam reformer; or one or more furnaces for pre-heating the charge of an autothermal reformer or partial oxidation reactor or natural-gas desulphurization section.

In one embodiment according to the process of the disclosure, a purge gas of the ammonia synthesis process, containing hydrogen and methane, is treated so as to recover the hydrogen contained in the purge gas, obtaining a hydrogen-rich gas and a tail gas containing methane; and wherein at least part of the tail gas is recycled and subjected to the step (i) of conversion of the natural gas into synthesis gas.

In one embodiment according to the process of the disclosure, a part of the COz-depleted synthesis gas is treated in a unit for separation of nitrogen, thereby obtaining a first stream of nitrogen-depleted synthesis gas and a second nitrogen-enriched stream; and wherein at least part of the nitrogen-depleted synthesis gas is used as fuel and any remaining part of the nitrogen-depleted synthesis gas is fed to the ammonia synthesis unit together with the second nitrogen-enriched stream.

In one embodiment according to the process of the disclosure, the process further comprises a step of expansion, with production of mechanical work, of the COz-depleted synthesis gas, after heating the COz-depleted synthesis gas.

In one embodiment according to the process of the disclosure, the overall steam/carbon ratio in the conversion step is greater than 2.0, more in particular the overall steam/carbon ratio in the conversion step is greater than 2.4, even more in particular, the overall steam/carbon ratio in the conversion step is greater than 2.7.

In one embodiment according to the process of the disclosure, the first or second hydrogen-rich gaseous stream forms all of the fuel of the furnaces used in the conversion section, and, optionally, an amount of natural gas is provided as trim fuel, the trim fuel accounting for not more than 15% of the total combustion heat; or

the first or second hydrogen-rich gaseous stream is produced in excess with respect to the fuel necessary for the conversion section, the quantity of the first or second hydrogen-rich gaseous stream exceeding that required as fuel being exported from the process; and regulation of the conversion section is performed by modulating the quantity of the first or second hydrogen-rich gas directed towards the conversion section and the quantity exported from the process.

In one embodiment according to the process of the disclosure, the conversion of the natural gas charge into synthesis gas includes a step of autothermal reforming, or a step of partial oxidation, the step of autothermal reforming or partial oxidation is performed with a steam/carbon ratio not greater than 2; or

the conversion of the natural gas into synthesis gas includes primary reforming of the natural gas in the presence of steam and secondary reforming performed with the oxygen flow or enriched air.

In one aspect of the disclosure, a method for revamping a plant for synthesis of ammonia from natural gas or ammonia/urea plant, wherein the plant includes a conversion section that includes a primary steam reformer and an air-fired secondary reformer, and a section for treatment of the synthesis gas by a shift reaction of carbon monoxide into carbon dioxide, and a CO₂ removal unit, is disclosed. The method comprises:
* providing a flow of enriched air or oxygen and using the flow as oxidant, instead of air, for the secondary reformer or substituting the primary steam reformer for a fire heater and substituting the air-fired secondary reformer for an autothermal reformer fired with oxygen-enriched air or oxygen, wherein the fire heater is located upstream the autothermal reformer and in fluid communication with the autothermal reformer;
* providing a first membrane for separation of H₂ from CO and CO₂ in a first synthesis gas through permeation over the first membrane, the first synthesis gas containing hydrogen, CO and CO₂ and obtained from the conversion section, thus obtaining a first hydrogen-rich gaseous stream and a first hydrogen-depleted gaseous flow; and/or providing a second membrane for separation of H₂ from a second synthesis gas, the second synthesis gas obtained by the shift reaction, thus obtaining a second hydrogen-rich gaseous stream and a second hydrogen-depleted gaseous flow; and
* providing a fluid communication for feeding at least part of the first or second hydrogen-rich gaseous flow as fuel to at least one furnace in the conversion section.

In one embodiment according to the process of the method for revamping according to the disclosure, the method further comprises installing an air separation unit so as to provide the oxygen or enriched air flow, and the separation unit also provides a nitrogen flow which is added to the COz-depleted synthesis gas in order to obtain the desired H₂ /N₂ ratio for the ammonia synthesis unit.

In one embodiment according to the process of the method for revamping according to the disclosure, the method further comprises inserting, if not already present, a methanation unit downstream of the CO₂ removal unit.

In one aspect of the disclosure, an ammonia production plant is disclosed. The ammonia production plant comprises:
- a conversion section for converting of a charge of desulphurized natural gas and steam, with oxygen-enriched air or with oxygen, into a first synthesis gas, the first synthesis gas containing hydrogen, CO and CO₂, wherein the conversion section comprises at least one furnace;
- a treatment section for treating the first synthesis gas and including at least
   ∘ a shift conversion unit for reacting the carbon monoxide present in the first synthesis gas into CO₂, thereby obtaining a second synthesis gas; and
   ∘ a separator downstream of the shift conversion unit for separating the CO₂ from the second synthesis gas.

The ammonia production plant is characterised in that it further comprises:
- a first membrane for separating hydrogen from the first synthesis gas, thus obtaining a first hydrogen-rich gaseous stream and a first hydrogen-depleted gaseous flow, and/or a second membrane for separating hydrogen from the second synthesis gas, thus obtaining a second hydrogen-rich gaseous stream and a second hydrogen-depleted gaseous flow; and
a fluid communication between the first or second hydrogen-rich gaseous flow and at least one furnace in the conversion section.

### Description of the Figures

Figure 1 represents an embodiment of a system according to the present disclosure.
Figure 2 represents a related embodiment of a system according to the present disclosure.

### DETAILED DESCRIPTION

Throughout the description and claims of this specification, the words "comprise" and variations thereof mean "including but not limited to", and they are not intended to (and do not) exclude other moieties, additives, components, integers or steps. Throughout the description and claims of this disclosure, the singular encompasses the plural unless the context otherwise requires. In particular, where the indefinite article is used, the disclosure is to be understood as contemplating plurality as well as singularity, unless the context requires otherwise.

Features, integers, characteristics, compounds, chemical moieties, or groups described in conjunction with a particular aspect, embodiment or example of the disclosure are to be understood to be applicable to any other aspect, embodiment or example described herein unless incompatible therewith. All of the features disclosed in this disclosure (including the description, claims, abstract and drawing), and/or all of the steps of any method or process so disclosed, may be combined in any combination, except combinations where at least some of such features and/or steps are mutually exclusive. The disclosure is not restricted to the details of any foregoing embodiments. The disclosure extends to any novel one, or any novel combination, of the features disclosed in this disclosure (including the description, claims, abstract and drawing), or to any novel one, or any novel combination, of the steps of any method or process so disclosed.

The enumeration of numeric values by means of ranges of figures comprises all values and fractions in these ranges, as well as the cited end points. The terms "ranging between ... to ..." or "range from ... to ..." or "up to" as used when referring to a range for a measurable value, such as a parameter, an amount, a time period, and the like, is intended to include the limits associated to the range that is disclosed.

In one aspect of the disclosure, a process for synthesis of ammonia from natural gas is disclosed. The process comprises (i) conversion of a charge of desulphurized natural gas and steam, with air, oxygen-enriched air or with oxygen, in a conversion section into a first synthesis gas, the first synthesis gas containing hydrogen, CO and CO₂, and the conversion section comprising at least one furnace; (ii) subjecting the first synthesis gas to a shift reaction of the carbon monoxide into CO₂, in a shift conversion unit, thereby obtaining a second synthesis gas, and subsequent separation of CO₂ from the second synthesis gas in a CO₂ removal unit, thus obtaining a CO₂-depleted synthesis gas and a CO₂-rich gaseous flow containing the CO₂ separated from the gas; and (iiia) separation of H₂ from CO and CO₂ in the first synthesis gas through permeation over a first membrane, thus obtaining a first hydrogen-rich gaseous stream and a first hydrogen-depleted gaseous flow; and/or (iiib) separation of H₂ from CO and CO₂ in the second synthesis gas over a second membrane, thus obtaining a second hydrogen-rich gaseous stream and a second hydrogen-depleted gaseous flow.

The process is characterised in that the first or second hydrogen-rich gaseous flow is fed as fuel to at least one furnace in the conversion section, and the first or second hydrogen-depleted gaseous flow are treated in the shift conversion unit or the CO₂ removal unit, respectively.

In one embodiment according to the process of the disclosure, the process further comprises the step of providing the COz-depleted synthesis gas to an ammonia synthesis unit after further purification.

The term "furnace" is understood as meaning an apparatus chosen from among: a steam reformer or a charge preheater or a steam generator or a steam superheater. These apparatuses, which operate by means of combustion, are identified by the term "fired heater". The furnace in some embodiments forms part of the section for converting the natural gas into synthesis gas. In combined ammonia/urea plants the furnace may form part of the urea section.

Shift conversion usually is achieved in a series of temperature shift units, usually a combination of a high temperature shift unit (HTS) and a low temperature shift unit (LTS), or one HTS and two low LTS units, or one medium shift temperature unit (MTS) and an LTS unit, the HTS, MTS and LTS respectively working at temperatures of 200-250 °C, 250-310 °C and 310-450 °C. It is to be herewith understood that when a permeation of the gas stream before shift conversion means the permeation of a gas stream before any one of a LTS, MTS or HTS unit or the combination of the permeation of gas streams before any one of a LTS, MTS or HTS unit.

As defined herewith, permeation is the process of selective molecular penetration of gases, vapours or fluids through the material membrane of a solid. The separation of the first or second hydrogen-rich gaseous stream is advantageously performed by permeating through a membrane a process flow, for example by permeating a process gas before shift reaction or upstream of the decarbonation, and for example using a polymeric hollow fibres-containing membrane or using a a porous, ceramic hollow fibre membrane coated with palladium on both its inner and outer sides. The person skilled in the art will be able to select the proper membrane, that is of the proper components with consideration of the temperature of the gas stream to be permeated. Alternatively, the person skilled in the art will be able to adjust the temperature according to the temperature tolerated by the membrane of his/her choice. Furthermore, the person skilled in the art will remove components other than hydrogen, CO and CO₂, such as water, upstream the shift reaction, as necessary to achieve the target efficiency in the separation of hydrogen. Finally, the person skilled in the art will choose the membrane with regard to its size, such that the membrane is mechanically sufficiently strong however not to thick such as to decrease permeation of the gas.

As a result of the permeation, two gas streams are separated: the first or second hydrogen-rich gaseous flow generated and the remaining part of the gas, also called process fraction. The two separated streams have different composition.

The term "hydrogen-rich" herewith defines a stream comprising at least 50%, more preferably 90% and even more preferably 95% hydrogen.

The inventor has realised that the use of a membrane allows for the separation of the hydrogen gas component, from the carbon monoxide gas in the gaseous stream to enter the shift conversion unit, or from the carbon dioxide in the gaseous stream leaving the shift conversion unit. This separation of the hydrogen gas can be performed on at least a part of the gaseous stream entering the shift conversion unit, or on at least part of the gaseous stream leaving the shift conversion unit. In this manner, a gas stream concentrated in hydrogen and the flow of which is controlled, can be produced and controlled such as to provide fuel to a furnace of the conversion section. Not only is a hydrogen-rich gaseous stream produced, but also is a carbon-monoxide rich, or concentrated, stream produced when the gaseous stream to enter the shift conversion unit is thereby permeated. In this manner, with an increased concentration of carbon monoxide and a reduced hydrogen concentration of the stream treated in the shift conversion unit, the chemical equilibrium is positively shifted in order to favour the conversion of carbon monoxide into CO₂ and H₂, thereby increasing the efficiency of the shift reaction. Further, not only is a hydrogen-rich gaseous stream produced, but also is a carbon-dioxide rich, or concentrated, stream produced when the gaseous stream leaving the shift reaction unit and to enter the carbon dioxide removal unit is thereby permeated. In this manner, with an increased concentration of carbon dioxide, the chemical equilibrium is positively shifted in order to favour the removal of carbon dioxide, thereby increasing the efficiency of the carbon dioxide removal process. Hence, the presence disclosure provides a method for not only reducing CO₂ emissions from the fuel section of an ammonia production plant, it further discloses how to do so while at the same time increasing the efficiency of the front end of the ammonia production plant.

When only part of a gas is treated for hydrogen gas separation by permeation through a containing membrane, the non-hydrogen gas stream resulting from the separation can conveniently be combined to the corresponding gas stream having by-passed the separation.

The invention hence suggests using a process gas part as fuel for one or more furnaces of the reforming section, differently from the prior art which, for this purpose, uses part of the natural gas, i.e. a hydrocarbon. The process gas is separated before a CO₂ removal treatment and it contains essentially hydrogen which may burn without forming CO₂. This essentially-containing hydrogen gas is then used as fuel. Consequently, it can be understood that the invention allows the CO₂ emissions into the atmosphere to be drastically reduced.

As regards the plant, the furnaces are advantageously equipped with dual-fuel burners able to burn both natural gas and synthesis gas. The invention may require the installation of an air separation unit (ASU) for the production of the enriched air and optionally nitrogen.

The invention may also be applied to ammonia/urea processes and plants. An ammonia/urea plant is a plant comprising a first ammonia synthesis section and a second section for synthesis of urea from ammonia and CO₂, wherein at least a part of the ammonia produced in the first section feeds the second section. In this case also the CO₂ separated during the decarbonation or removal step feeds advantageously the second urea synthesis section.

In one embodiment according to the process of the disclosure, each of the first or second hydrogen-rich gaseous stream is between 1% and 40% of the total amount of first and second synthesis gas, respectively, more in particular each of the first or second hydrogen-rich gaseous stream is between 10% and 30%, even more in particular between 5% and 15% of the total amount of the first and second synthesis gas, respectively.

It should be noted that the first or second hydrogen-rich gaseous flow is relatively high, for example about 1/3 of the total. The invention in fact envisages that a non-negligible portion of synthesis gas is allocated to fuel in order to reduce the CO₂ emissions. This results in the need to produce an additional quantity of synthesis gas, but, as will be explained more clearly below under the list of advantages, this necessity is compensated for by the advantages of the invention. The combustion of the first or second hydrogen-rich gaseous flow is substantially free from production of CO₂. In fact, the combustion of the hydrogen does not form CO₂, and only the small quantity of CO or CH₄, if present, may form CO₂.

The first or second hydrogen-rich gaseous flow preferably forms all - or substantially all - the fuel of the furnaces used for the process. In some embodiments, however, it is preferred to keep a small amount of natural gas which is called "trim fuel" of the furnace. Preferably the small quantity accounts for not more than 15%, more preferably not more than 10%, of the total combustion heat (duty) of the furnace. The trim fuel allows the furnace to be rapidly controlled, for example in order to quickly raise or lower the load if needed. The percentage of the combustion heat may be expressed as the product between the flowrate (kg/s or mol/s) and the calorific power (J/kg or J/mol).

In one embodiment according to the process of the disclosure, the process further comprises a step for methanation of the COz-depleted synthesis gas and/or addition of nitrogen to the COz-depleted synthesis gas.

According to some embodiments of the invention, methanation of the synthesis gas is performed downstream of decarbonation (CO₂ removal). The methanation step converts residual CO and CO₂ into CH₄, consuming H₂, in accordance with the reactions

CO + 3 H₂ → CH₄ + H₂O;

and

CO₂ + 4 H₂ → CH₄ + 2 H₂O

The advantage of separating the first or second hydrogen-rich gaseous stream before methanation is that of not oversizing the methanation section of the first or second hydrogen-rich gaseous stream, and of not losing the methanation heat of the first or second hydrogen-rich gaseous stream. Moreover, for the same furnace heat requirement and the same gas temperature, the first or second hydrogen-rich gaseous stream is slightly less if removed before methanation.

In one embodiment according to the process of the disclosure, the first hydrogen-rich gaseous stream comprises at least 95% by volume hydrogen, and/or wherein the second hydrogen-rich gaseous stream comprises at least 95% by volume hydrogen.

In one embodiment according to the process of the disclosure, the enriched air contains at least 50% oxygen, particularly wherein the enriched air contains at least 90% oxygen.

The use of oxygen-enriched air gives rise to various advantages:
it increases the heat value of the synthesis gas;
combustion of the synthesis gas generates less fumes than the combustion of natural gas, for the same amount of heat released, because the combustion of hydrogen (contained in the synthesis gas) occurs with a reduction of the number of mols, unlike the combustion of methane, so that the convective current of the reformer is smaller and requires an induced draft (ID) fan which is less powerful;
it limits the flue loss of nitrogen (which is a reagent), avoiding wastage of energy for N₂ separation and compression; the generation of nitrogen for synthesis must not be increased;
it allows a high temperature for conversion of the natural gas to be maintained, free from the constraint of avoiding the introduction of excessive nitrogen in relation to the stoichiometry of the NH₃ synthesis (typical of conventional air-fired processes) with a high conversion of the methane resulting in minimal CO₂ emissions.

In conventional plants with a secondary air-fed reformer, the process air is fed to the secondary reformer in stoichiometric quantities, i.e. in the quantity required to reach a H/N ratio of about 3 in the make-up gas. This means that the air flowrate (in particular the quantity of oxygen introduced into the reformer) cannot be freely chosen, for example in order to achieve full conversion of the natural gas.

Instead, if the oxidant and the nitrogen are separately fed to the process, it is possible to choose the flowrate of oxidant so as to obtain complete conversion of the natural gas and optionally add, downstream, the nitrogen which is needed for the desired make-up gas composition. The advantage of full conversion is to produce a synthesis gas with a smaller methane content and therefore lower CO₂ emissions.

In one embodiment according to the process of the disclosure, the first or second hydrogen-rich gaseous stream feeds one or more of the following apparatuses: a steam production and/or superheating furnace; one or more burners of a primary steam reformer; or one or more furnaces for pre-heating the charge of an autothermal reformer or partial oxidation reactor or natural-gas desulphurization section.

In one embodiment according to the process of the disclosure, a purge gas of the ammonia synthesis process, containing hydrogen and methane, is treated so as to recover the hydrogen contained in the purge gas, obtaining a hydrogen-rich gas and a tail gas containing methane; and wherein at least part of the tail gas is recycled and subjected to the step (i) of conversion of the natural gas into synthesis gas.

Nitrogen addition to the synthesis gas may be performed upstream the ammonia synthesis unit, in order to adjust the hydrogen:nitrogen ratio, preferably to 3:1, entering the ammonia synthesis unit. In case nitrogen addition is performed, the advantage of separating the first or second hydrogen-rich gaseous stream before nitrogen addition is a greater calorific power of the synthesis gas used as fuel, which does not contain nitrogen, or contains a smaller amount thereof.

In one embodiment according to the process of the disclosure, a part of the COz-depleted synthesis gas is treated in a unit for separation of nitrogen, thereby obtaining a first stream of nitrogen-depleted synthesis gas and a second nitrogen-enriched stream; and wherein at least part of the nitrogen-depleted synthesis gas is used as fuel and any remaining part of the nitrogen-depleted synthesis gas is fed to the ammonia synthesis unit together with the second nitrogen-enriched stream.

After separating the first or second hydrogen-rich gaseous stream, the COz-depleted synthesis gas may be optionally treated in a purification section comprising, for example, a PSA unit or comprising a dryer followed by a cryogenic unit.

The purification section produces at least one stream of ammonia synthesis gas with a reduced content of methane (CH₄), CO, O₂ and argon, and at least one waste stream containing CO, and CH₄. The waste stream may also contain H₂ and N₂. In some embodiments, at least part of the waste gas of the purification section is used as fuel together with the first or second hydrogen-rich gaseous stream. Consequently, the first or second hydrogen-rich gaseous stream first or second hydrogen-rich gaseous stream may be reduced.

The advantage of the purification unit is that of reducing the inerts content in the make-up gas, resulting in known advantages for the ammonia synthesis, including smaller consumption for circulation and a reduction (or even elimination) of the purge flow of the ammonia synthesis loop.

The advantage of separating the first or second hydrogen-rich gaseous stream before the purification unit is that only the synthesis gas portion supplied to the ammonia synthesis undergoes treatment in the purification section which, without having to process the synthesis gas corresponding to the first or second hydrogen-rich gaseous stream, may be realized with much smaller dimensions. The advantage of separating the first or second hydrogen-rich gaseous stream is that of avoiding oversizing of the purification unit and the corresponding consumption for the first or second hydrogen-rich gaseous stream. Another advantage is the possibility of controlling separately the first or second hydrogen-rich gaseous stream and the purification unit.

There is no disadvantage in separating the first or second hydrogen-rich gaseous stream upstream of the purification from the point of view of the CO₂ emissions into atmosphere, since the CO, CO₂ and CH₄ contained in the first or second hydrogen-rich gaseous stream would be separated by the purification unit to form the waste stream and used as fuel.

Advantageously, the purification unit does not need to have an excessively high hydrogen recovery, because the hydrogen "lost" in the waste gas is used as fuel and does not produce CO₂ emissions into atmosphere. The first or second hydrogen-rich gaseous stream is consequently regulated.

Preferably, however, the purification unit has a sufficiently high hydrogen recovery such that the first or second hydrogen-rich gaseous stream accounts for at least 30%, preferably at least 40%, even more preferably at least 50% of the furnace duty. The applicant has found that this condition is advantageous for the control of the furnace itself independently of the control of the purification unit.

The purification section may comprise selective adsorption of the undesirable components onto a solid. In some embodiments the purification section comprises a PSA (pressure swing adsorption) unit which uses molecular sieves for separating CO, CH₄, Ar, H₂O and residual CO₂. In other embodiments the section comprises at least one dryer for separating residual CO₂ and water, followed by a cryogenic unit for separation of CO, CH₄ and Ar. The cryogenic separation unit is preferably a Liquid Nitrogen Wash (LNW) unit.

A PSA unit typically produces a single flow of purified product, substantially at the feed pressure, and a single stream of waste gas, at a pressure much lower than the feed pressure. The waste stream contains CO, CH₄, Ar, H₂O and residual CO₂, and may contain H₂ and N₂.

If the purification section comprises dryer and LNW, the purified product may emerge as one or more streams, and may already contain H₂ and N₂ in a suitable ratio for the synthesis of ammonia.

The dryer has a tail gas, product of regeneration of the molecular sieves used for capturing mainly H₂O and the traces of residual CO₂ contained in the feed, which would freeze during the cryogenic treatment in the LNW unit. The dryer may be regenerated with a nitrogen flow (from the air separation unit). In this case the tail gas containing N₂, H₂O and CO₂ may be discharged into atmosphere or combined with the tail gas of the LNW described below.

The LNW also has at least one tail gas which contains the bottom end product of the LNW absorption column, containing CH₄ and CO, in addition to N₂ and H₂. The discharge gas of the LNW may be conveyed away as fuel.

The tail gas of the LNW may be used at least partly for the regeneration of the dryer before being conveyed away as fuel.

The synthesis gas with a low content of inerts, that is CH₄, argon, and any N₂ or H₂ in excess of the required 3:1 N₂:H₂ ratio, may be conveyed away for ammonia synthesis.

According to the invention, the CO₂ flue emissions are mainly determined by the CO, CO₂ and CH₄ content in the first or second hydrogen-rich gaseous stream, as well as by the optional trim fuel flow.

The combustion of the gas is substantially free from CO₂ production. In fact, the hydrogen combustion does not form CO₂, and only the small quantity of CO or CH₄, if present, may form CO₂.

The CO₂ production is also derived from the combustion of the methane contained in the synthesis loop purge flow.

In case a purification unit is present, CO₂ production is also derived from the combustion of CO, CH₄ and residual CO₂ of the discharge gas.

In one embodiment according to the process of the disclosure, the process further comprises a step of expansion, with production of mechanical work, of the CO₂-depleted synthesis gas, after heating the CO₂-depleted synthesis gas.

The gas is available at a pressure higher than the pressure required for combustion in a furnace and therefore it may be expanded in a suitable machine, such as an expander or a turbine, producing mechanical work. For example, the expansion may be from about 25 bar to about 3 bar. The gas has a high specific volume given that it comprises essentially H₂ and for this reason its expansion may generate a considerable amount of power. The power obtained may cover partly the process requirements, making it more efficient.

The invention further also allows to produce the electricity necessary for the synthesis of ammonia or of its derivatives (for example urea) with low emissions of CO₂, using a fuel CO₂-depleted synthesis gas, for example in the following ways:
- expansion in a turbo generator of a flow of steam produced in a steam generator or steam superheater, fed by the COz-depleted synthesis gas as fuel; or
- combustion in a gas turbine or in a gas engine, fed by the COz-depleted synthesis gas as fuel.

In one embodiment according to the process of the disclosure, the overall steam/carbon ratio in the conversion step is greater than 2.0, more in particular the overall steam/carbon ratio in the conversion step is greater than 2.4, even more in particular, the overall steam/carbon ratio in the conversion step is greater than 2.7.

As defined herein, the overall steam to carbon ratio is the ratio of the overall molar amount of steam fed in the conversion step i) and the shift reaction ii) over the overall molar amount of carbon in the natural gas fed in the conversion step i) and the shift reaction ii).

In some embodiments the shift step comprises two steps at different temperatures, for example preferably one high-temperature shift (HTS), for example carried out using an iron-based catalyst, followed by a low-temperature shift (LTS) or medium-temperature shift (MTS), for example carried out using a copper-based catalyst. The associated advantage is that of obtaining the maximum conversion of the CO into CO₂, which will then be separated during the decarbonation step, so as to obtain the minimum residual CO content in the synthesis gas used as fuel. Since the CO is a source of CO₂, during combustion, the advantage of minimizing the CO₂ flue emissions is obtained.

In some embodiments, in which a relatively low overall S/C ratio is used, for example <2.7, the shift preferably comprises two steps in series carried out over catalyst suitable to operate with a low steam content, for example a copper-based catalyst. In this configuration, the first step consists of a medium temperature shift (MTS), which is preferably pseudo-isothermal and operates in the temperature range of 200-320°C, and the second step is a low temperature shift (LTS) operating in the temperature range 180-250°C.

In some embodiments the overall steam/carbon (S/C) ratio during conversion is greater than 2.0, preferably greater than 2.2 and more preferably greater than 2.7. Generally, the prior art teaches a preference for low S/C ratios in order to increase the capacity of the conversion section (front end). The invention instead envisages a relatively high S/C ratio in order to maximize the conversion of the methane and the CO during the shift step and reduce the concentration of CH₄ and CO in the synthesis gas. Since the methane and CO are a source of CO₂, during combustion, the advantage of minimizing the CO₂ flue emissions is obtained.

In the case of pure ATR (optionally in combination with pre-reformer) or POX, the invention employs a S/C ratio not higher than 2 in the reforming section. Preferably further steam is added downstream of the reforming and upstream of the shift, until an overall S/C ratio greater than 2, and preferably greater than 2.4, is reached so as to promote the progression of the shift reaction and the associated conversion of the carbon monoxide.

In one embodiment according to the process of the disclosure, the first or second hydrogen-rich gaseous stream forms all of the fuel of the furnaces used in the conversion section, and, optionally, an amount of natural gas is provided as trim fuel, the trim fuel accounting for not more than 15% of the total combustion heat; or

the first or second hydrogen-rich gaseous stream is produced in excess with respect to the fuel necessary for the conversion section, the quantity of the first or second hydrogen-rich gaseous stream exceeding that required as fuel being exported from the process; and regulation of the conversion section is performed by modulating the quantity of the first or second hydrogen-rich gas directed towards the conversion section and the quantity exported from the process.

The first or second hydrogen-rich gaseous stream has a combustion heat substantially corresponding to the heat required by the furnace. In order to rapidly control the furnace, for example in order to quickly raise or lower the load when needed, the flowrate of the first or second hydrogen-rich gaseous stream is suitably raised or lowered. This control, however, has the undesirable effect of varying the flowrate of the make-up gas, and therefore the production. In order to re-establish the initial production, it is necessary to increase or reduce the total flowrate of natural gas fed to the reforming section, which in turn requires control of the furnace. It may be understood how this procedure is operationally undesirable. According to one aspect of the invention: the first or second hydrogen-rich gaseous stream fraction is produced in an overabundant amount with respect to the requirement of the at least one furnace, i.e. a surplus of the first or second hydrogen-rich gaseous stream to be used as fuel is produced with respect to the corresponding quantity of heat required by the furnace, and the surplus of the first or second hydrogen-rich gaseous stream is exported from the process, i.e. is not used either as fuel or as process fraction. The availability of synthesis gas in excess (for use as fuel) allows to rapidly regulate the at least one furnace without using, or using to a lesser degree, the trim fuel, with a further advantage in terms of reduction of the CO₂ emissions.

For example, the surplus may be:
- exported as a further product (for example as hydrogen or as COz-depleted fuel for consumption outside the ammonia plant) or
- conveyed to a storage buffer, or
- flared.

In order to rapidly control the furnace, for example in order to quickly raise or lower the load in the case of need, the flowrate of the first or second hydrogen-rich gaseous stream surplus is suitably lowered or raised, without affecting either the first or second hydrogen-rich gaseous stream or the process fraction.

A surplus of fuel gas may be taken from the first or second hydrogen-rich gaseous stream, and therefore have the same composition and pressure as the fuel synthesis gas.

Alternatively, if a purification unit (for example a PSA unit) or a methanation unit is present, A surplus of fuel gas may also be collected downstream of purification or methanation, so as to obtain greater purity of the surplus exported.

The surplus fuel may be separated from the tail gas of purification (PSA, or dryer + LNW), even though the solution is less preferred for two reasons:
the tail gas has a low pressure, therefore a compression is required to export the tail gas (with considerable energy expenditure and plant cost);
the tail gas contains CO, CO₂ and CH₄ in a concentration much greater than both the fuel synthesis gas and the purification product, therefore it has a less desirable composition.

The quantity of the surplus fuel is preferably >2%, more preferably >4%, and even more preferably >6% of the first or second hydrogen-rich gaseous stream. If the surplus of the fuel gas is not exported, its quantity is preferably not greater than 15% of the first or second hydrogen-rich gaseous stream, and even more preferably not greater than 10% of the first or second hydrogen-rich gaseous stream, in order to prevent an excessive consumption thereof.

In one embodiment according to the process of the disclosure, the conversion of the natural gas charge into synthesis gas includes a step of autothermal reforming, or a step of partial oxidation, the step of autothermal reforming or partial oxidation is performed with a steam/carbon ratio not greater than 2; or

the conversion of the natural gas into synthesis gas includes primary reforming of the natural gas in the presence of steam and secondary reforming performed with the oxygen flow or enriched air.

The conversion of the natural gas into synthesis gas may be performed using different techniques.

According to some embodiments of the invention, the step of natural gas conversion into synthesis gas comprises primary reforming followed by secondary reforming. In some embodiments, more preferably, the conversion step comprises a catalytic autothermal reforming (ATR), optionally preceded by a preliminary reforming (pre-reforming). An ATR without preliminary reforming is also called "pure ATR". Advantageously, in these embodiments, at least a part of the first or second hydrogen-rich gaseous stream feeds a furnace for pre-heating the gas prior to autothermal reforming.

The advantage of using ATR, pure or in combination with a pre-reformer, consists in the smaller heat requirement of the furnace compared to the combination of the ATR with a primary reformer, also considering the heat required for generation and overheating of steam necessary for the process. This is due to the fact that the preheating temperature of the ATR feed and of the optional pre-reformer according to the invention is suitably chosen at a value not greater than 650°C, lower than the output temperature of the primary reformer, and due to the fact that, in the preheating furnace, there is no progression of the steam reforming reaction (which is endothermic).

A pure ATR, or ATR in combination with a pre-reformer, may advantageously operate with a steam/carbon (S/C) ratio less than that of a primary reformer. Preferably, the S/C ratio is not greater than 2, more preferably not greater than 1.5, even more preferably not greater than 1. This also helps reduce the heat required by the furnace for preheating the feed of the ATR and optional pre-reformer.

In the case of ATR without primary reformer, the first or second hydrogen-rich gaseous stream is preferably comprised between 1 and 30%, more preferably between 10 and 30%, even more preferably between 10 and 20%.

In some embodiments the step for converting the natural gas into synthesis gas comprises a non-catalytic POX (partial oxidation) step. Advantageously, in these embodiments at least a part of the first or second hydrogen-rich gaseous stream feeds a furnace for preheating the gas before the partial non-catalytic oxidation or for steam generation or steam superheating.

The advantage of using a POX consists in the smaller heat requirement of the furnace compared to the combination of an ATR with a primary reformer, also considering the heat required for generation and overheating of steam necessary for the process. This is due to the fact that the preheating temperature of the POX feed according to the invention is suitably chosen at a value not higher than 500°C, markedly lower than the output temperature of the primary reformer, and due to the fact that in the preheating furnace there is no progression of the steam reforming reaction (which is endothermic). Moreover, POX may advantageously use a S/C ratio lower than that of a primary reformer, preferably not greater than 2, more preferably not greater than 1, even more preferably not greater than 0.5. This also helps reduce the heat required by the preheating furnace.

In the case of POX, the first or second hydrogen-rich gaseous stream is preferably comprised between 1 and 30%, more preferably between 10 and 30%, even more preferably between 10 and 20%.

The reduction in the heat required by the preheating furnace for a POX and for a pure ATR compared to an ATR in combination with a primary reformer provides the following advantages: less of the first or second hydrogen-rich gaseous stream of the synthesis gas is required, and it is possible to reduce the quantity of trim fuel, therefore lower CO₂ flue emissions may be obtained.

Both in the case of POX with optional purification unit of the synthesis gas and in the case of ATR without primary reformer and with optional purification unit of the synthesis gas, it is preferable to select a purification unit with high hydrogen recovery, for example a liquid nitrogen wash, so as to ensure that the first or second hydrogen-rich gaseous stream is sufficiently large to control the furnace independently of control of the purification unit.

Another advantage of the POX and ATR without primary reformer, consequence of both the smaller first or second hydrogen-rich gaseous stream and the smaller steam/carbon ratio, is the smaller autogenous steam production, which reduces the heat required for the associated overheating, the first or second hydrogen-rich gaseous stream, the CO₂ flue emissions and the total natural gas consumption.

The smaller autogenous steam production may result in a lack of steam for driving the turbines or of electricity for powering the motors of the machines. The missing energy may be conveniently imported from outside the plant as electricity with reduced CO₂ emissions, for example generated by renewable sources. It should be pointed out that this synergy is not possible if the process already produces an excess of steam or energy, for example in the case of combination of primary reformer and ATR with a fairly large first or second hydrogen-rich gaseous stream.

In some embodiments the step of converting the natural gas into synthesis gas also comprises a steam reforming step. Advantageously, in these embodiments at least a part of the first or second hydrogen-rich gaseous stream feeds the burners of the reformer.

The conversion of the natural gas into synthesis gas, for example by means of reforming, is preferably performed at a pressure lower than 50 bar, more preferably lower than 40 bar, and even more preferably lower than 30 bar.

Generally, the prior art teaches the preference for high conversion pressures, in order to increase the capacity of the conversion section (front end) and reduce the consumption of synthesis gas compression. The present invention is instead preferably implemented with low conversion pressures in order to obtain the maximum conversion of the methane, since the steam reforming reaction is favoured at a lower pressure, so as to have the minimum residual methane content in the synthesis gas used as fuel. Since the methane is a source of CO₂, during combustion, the advantage of minimizing the CO₂ flue emissions is obtained.

In the case of ATR, a high methane conversion is also obtained by operating at a relatively high output temperature, >950°C, preferably >1000°C, even more preferably > 1030°C.

In the case of POX, a high methane conversion is also obtained by operating at a relatively high output temperature, >1200°C, preferably >1300°C.

A part of the first or second hydrogen-rich gaseous stream, in some embodiments, to furnaces for the production and/or superheating of steam.

Generally, in ammonia processes, a purging gas is extracted from the ammonia synthesis loop, in order to remove the inert substances from the synthesis loop, and the purging gas is treated with a process for recovery of the hydrogen contained in it (HRU). The recovery process generates a hydrogen-rich gas which may be reused for synthesis and a tail gas containing most of the methane initially contained in the purging gas. The methane in the tail gas is practically all that contained in the process fraction of the synthesis gas. Normally the tail gas, given its relatively high methane content, is used exclusively as fuel. This use of tail gas, however, generates CO₂ emissions.

According to one aspect of the invention at least a part of the tail gas is recycled as process gas during the natural gas conversion step, for example during the reforming or partial oxidation step. An associated advantage is a further reduction in the CO₂ emissions.

The main advantages of the invention are listed below.

The separation of the CO₂ is performed from a synthesis gas which has a high concentration of CO₂ (95% by mol) and is at a relatively high pressure, and therefore the separation of CO₂ from this flow is much easier and requires a lower energy consumption than CO₂ separated from combustion fumes.

The system according to the invention does not require solvent in order to capture CO₂ from fumes.

The use of oxygen-enriched air gives rise to various advantages:
- it increases the heat value of the synthesis gas;
- combustion of the synthesis gas generates less fumes than the combustion of natural gas, for the same amount of heat released, because the combustion of hydrogen (contained in the synthesis gas) occurs with a reduction of the number of mols, unlike the combustion of methane, so that the convective current of the reformer is smaller and requires an induced draft (ID) fan which is less powerful;
- it limits the flue loss of nitrogen (which is a reagent), avoiding wastage of energy for N₂ separation and compression; the generation of nitrogen for synthesis must not be increased;
- it allows a high temperature for conversion of the natural gas to be maintained, free from the constraint of avoiding the introduction of excessive nitrogen in relation to the stoichiometry of the NH3 synthesis (typical of conventional air-fired processes) with a high conversion of the methane resulting in minimal CO₂ emissions.

In conventional plants with a secondary air-fed reformer, the process air is fed to the secondary reformer in stoichiometric quantities, i.e. in the quantity required to reach a H/N ratio of about 3 in the make-up gas. This means that the air flowrate (in particular the quantity of oxygen introduced into the reformer) cannot be freely chosen, for example in order to achieve full conversion of the NG.

Instead, if the oxidant and the nitrogen are separately fed to the process, it is possible to choose the flowrate of oxidant so as to obtain complete conversion of the natural gas and optionally add, downstream, the nitrogen which is needed for the desired make-up gas composition. The advantage of full conversion is to produce a synthesis gas with a smaller methane content and therefore lower CO₂ emissions.

Another advantage of the invention is that the greater flowrate of gas in the front end, in order to compensate for the first or second hydrogen-rich gaseous streams being used as fuel and not for ammonia synthesis, allows more heat to be recovered and more steam to be generated. The greater quantity of steam produced in the front end limits the duty of the respective auxiliary steam-generating apparatus; an advantage is that the fuel consumption (and potential source of CO₂ emissions) is represented only by the primary reformer or fired heater. If the fuel of the reformer is replaced with synthesis gas (and if necessary the associated burners replaced) a substantial elimination or zeroing of the CO₂ emissions is obtained.

In some embodiments it may be advantageous to perform a synthesis gas purification in order to reduce the overall energy consumption of the process.

When applied to plants, the invention achieves significant synergies which allows the CO₂ emissions to be reduced without production losses, limiting modifications and costs. This is because:
- The invention reduces greatly the gas flowrate in the front end, and therefore the associated apparatus and (secondary, shift reaction, decarbonation or methanation) piping are suitable for a greater capacity;
- the greater capacity corresponds to the synthesis gas to the first or second hydrogen rich gaseous flow to be used as fuel;
- a high output temperature from the secondary reformer may be used (obtaining increased conversion of the methane), because the nitrogen is added separately from the oxygen; therefore the process according to the invention produces extra gas to be used as fuel without requiring costly modifications of the primary reformer, even when the reformer is substantially at the limit of its capacity;
- the CO₂ removal section is de-bottlenecked because the invention increases the partial CO₂ pressure and reduces the gas flowrate in the absorber;
- the combustion of the CO₂ -depleted synthesis gas generates fewer fumes than the NG so that the convective current of the reformer and ID fan are less charged;
- it is necessary to modify only the front end, while the backend (synthesis gas compressor, ammonia synthesis, refrigerating section) is substantially unchanged.
- the process does not require intense purification of the synthesis gas in order to remove the inert components, it being sufficient to use the methanator (often the existing one); in particular, it is not necessary to perform any separation of the synthesis gas into an H₂ and waste gas flow.

In one aspect of the disclosure, a method for revamping a plant for synthesis of ammonia from natural gas or ammonia/urea plant, wherein the plant includes a conversion section that includes a primary steam reformer and an air-fired secondary reformer, and a section for treatment of the synthesis gas by a shift reaction of carbon monoxide into carbon dioxide, and a CO₂ removal unit, is disclosed. The method comprises providing a flow of enriched air or oxygen and using the flow as oxidant, instead of air, for the secondary reformer or substituting the primary steam reformer for a fire heater and substituting the air-fired secondary reformer for an autothermal reformer fired with oxygen-enriched air or oxygen, wherein the fire heater is located upstream the autothermal reformer and in fluid communication with the autothermal reformer; providing a first membrane for separation of H₂ from CO and CO₂ in a first synthesis gas through permeation over the first membrane, the first synthesis gas containing hydrogen, CO and CO₂ and obtained from the conversion section, thus obtaining a first hydrogen-rich gaseous stream and a first hydrogen-depleted gaseous flow; and/or providing a second membrane for separation of H₂ from a second synthesis gas, the second synthesis gas obtained by the shift reaction, thus obtaining a second hydrogen-rich gaseous stream and a second hydrogen-depleted gaseous flow; and providing a fluid communication for feeding at least part of the first or second hydrogen-rich gaseous flow as fuel to at least one furnace in the conversion section.

In one embodiment according to the process of the method for revamping according to the disclosure, the method further comprises installing an air separation unit so as to provide the oxygen or enriched air flow, and the separation unit also provides a nitrogen flow which is added to the COz-depleted synthesis gas in order to obtain the desired H₂/N₂ ratio for the ammonia synthesis unit.

In one embodiment according to the process of the method for revamping according to the disclosure, the method further comprises inserting, if not already present, a methanation unit downstream of the CO₂ removal unit.

In one aspect of the disclosure, an ammonia production plant is disclosed. The ammonia production plant comprises a conversion section for converting of a charge of desulphurized natural gas and steam, with oxygen-enriched air or with oxygen, into a first synthesis gas, the first synthesis gas containing hydrogen, CO and CO₂, wherein the conversion section comprises at least one furnace; a treatment section for treating the first synthesis gas and including at least a shift conversion unit for reacting the carbon monoxide present in the first synthesis gas into CO₂, thereby obtaining a second synthesis gas, and a separator downstream of the shift conversion unit for separating the CO₂ from the second synthesis gas.

The ammonia production plant is characterised in that it further comprises a first membrane for separating hydrogen from the first synthesis gas, thus obtaining a first hydrogen-rich gaseous stream and a first hydrogen-depleted gaseous flow, and/or a second membrane for separating hydrogen from the second synthesis gas, thus obtaining a second hydrogen-rich gaseous stream and a second hydrogen-depleted gaseous flow; and a fluid communication between the first or second hydrogen-rich gaseous flow and at least one furnace in the conversion section.

### Examples

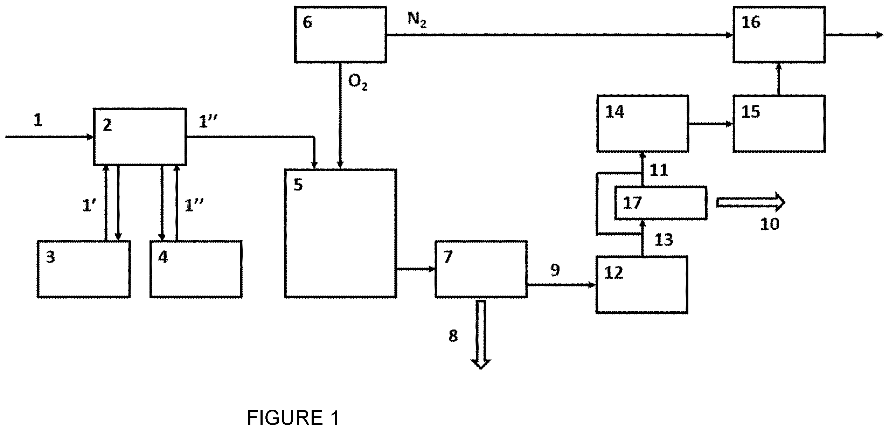

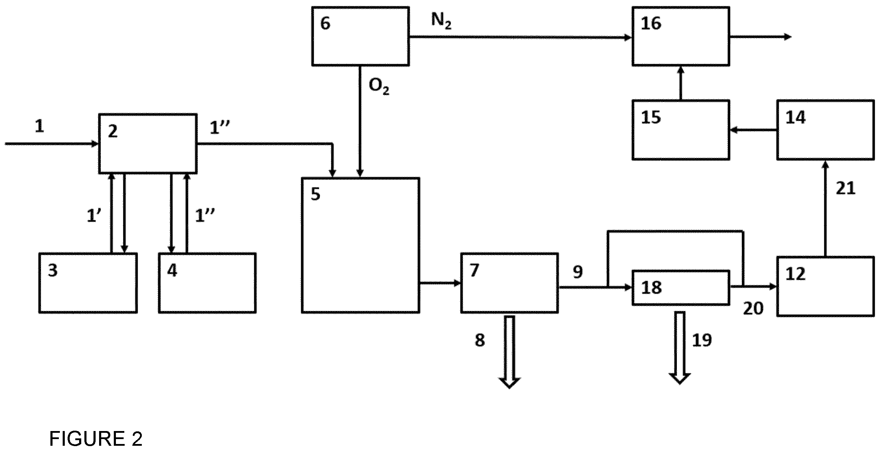

Reference is made to Figure 1 and 2. Natural gas (1) was heated in a fire heater (2) and desulphurized in a desulphurization unit (3). The desulphurised gas (1') then was pre-reformed in a pre-reformer (4). The pre-reformed gas (1") then was fired with oxygen (O₂) in an autothermal reformer (5) in the presence of steam, which provided a gas stream comprising carbon monoxide CO and hydrogen gas H₂. The oxygen supplied to the autothermal reformer (5) was supplied from an air separation unit (6). The heat of the gas leaving the autothermal reformer then was exchanged with water in a steam generator (7) such as to produce steam (8) and a gaseous stream (9) comprising 7% CO₂, 14% CO and 55% H₂, also referred to as the first synthesis gas, having a lower temperature than the gaseous stream existing the autothermal reformer (6).

In an embodiment represented in Figure 1, first synthesis gas (9) was treated in the shift converter (12), such as to convert the CO in the gaseous stream into carbon dioxide, CO₂, and to provide a gaseous stream comprising 1% CO, 25% of CO₂ and 72% H₂ (13), also referred to as the second synthesis gas (13). Part of this second synthesis gas (13) provided by the shift converter (12) was passed over a membrane (17), particularly a porous, ceramic hollow fibre membrane coated with palladium on both its inner and outer sides, for separating the H₂ gas from the yet unconverted CO and CO₂ by permeation, such as to produce an H₂ stream (10) comprising 95% hydrogen and a gaseous stream comprising 95% CO₂ (11). The volume ratio of the H₂ stream (10) comprising 95% H₂ was 11% by volume of the gaseous stream comprising 95% CO₂. The H₂ stream (10) comprising 95% hydrogen was used as fuel in the fire heater (2). The gaseous stream comprising 95% CO₂ (11) was subsequently treated, along with the second synthesis gas (13) not passed over the ceramic hollow fibre membrane, in a CO₂ removal unit (14) and then cleaned in a cleaning unit (15) before being finally converted into ammonia in an ammonia synthesis unit (16). Nitrogen to the ammonia synthesis unit (16) was provided by the air separation unit (6).

In an embodiment represented in Figure 2, part of the first synthesis gas (9) obtained from the steam generation unit (7) was passed over a membrane (18), particularly a porous, ceramic hollow fibre membrane coated with palladium on both its inner and outer sides, for separating the H₂ gas from the yet unconverted CO and CO₂ by permeation, such as to produce an H₂ stream (19) comprising 95% hydrogen and a gaseous stream enriched in CO and CO₂ (20). The latter gas stream (20) was then treated in the shift converter (12), such as to convert the CO in the gaseous stream into carbon dioxide, CO₂, and to provide the second synthesis gas. The H₂ stream (19) comprising 95% hydrogen was used as fuel in the fire heater (2). The gaseous stream comprising 95% CO₂ (21) was subsequently treated, along with the first synthesis gas (9) not passed over the ceramic hollow membrane, in a CO₂ removal unit (14) and then cleaned in a cleaning unit (15) before being finally converted into ammonia in an ammonia synthesis unit (16). Nitrogen to the ammonia synthesis unit (16) was provided by the air separation unit (6).

In general, the efficiency in the shift conversion unit was improved compared with when no separation through permeation of part of the first synthesis gas (9) was performed. Further, the CO₂ emissions coming from the auto thermal reformer (5) were lowered compared with when no separation through permeation of the second synthesis gas (13) was performed.

## Claims

1. A process for synthesis of ammonia from natural gas, the process comprising:
(i) conversion of a charge of desulphurized natural gas and steam, with air, oxygen-enriched air or with oxygen, in a conversion section into a first synthesis gas, the first synthesis gas containing hydrogen, CO and CO₂, and the conversion section comprising at least one furnace;
(ii) subjecting the first synthesis gas to a shift reaction of the carbon monoxide into CO₂, in a shift conversion unit, thereby obtaining a second synthesis gas, and subsequent separation of CO₂ from the second synthesis gas in a CO₂ removal unit, thus obtaining a COz-depleted synthesis gas and a CO₂-rich gaseous flow containing the CO₂ separated from the gas; and
(iiia) separation of H₂ from CO and CO₂ in the first synthesis gas through permeation over a first membrane, thus obtaining a first hydrogen-rich gaseous stream and a first hydrogen-depleted gaseous flow; and/or (iiib) separation of H₂ from CO and CO₂ in the second synthesis gas over a second membrane, thus obtaining a second hydrogen-rich gaseous stream and a second hydrogen-depleted gaseous flow,
wherein the first or second hydrogen-rich gaseous flow is fed as fuel to at least one furnace in the conversion section, and wherein the first or second hydrogen-depleted gaseous flow are treated in the shift conversion unit or the CO₂ removal unit, respectively.

2. The process according to claim 1, further comprising the step of providing the COz-depleted synthesis gas to an ammonia synthesis unit after further purification.

3. The process according to claim 1 or 2, wherein each of the first or second hydrogen-rich gaseous stream is between 1% and 40% of the total amount of first and second synthesis gas, respectively, more in particular wherein each of the first or second hydrogen-rich gaseous stream is between 10% and 30%, even more in particular between 5% and 15% of the total amount of the first and second synthesis gas, respectively.

4. The process according to any one of claims 1 to 3, further comprising a step for methanation of the COz-depleted synthesis gas and/or addition of nitrogen to the COz-depleted synthesis gas.

5. The process according to any one of claims 1 to 4, wherein the first hydrogen-rich gaseous stream comprises at least 95% by volume hydrogen, and/or wherein the second hydrogen-rich gaseous stream comprises at least 95% by volume hydrogen.

6. The process according to any one of claims 1 to 5, wherein the enriched air contains at least 50% oxygen, particularly wherein the enriched air contains at least 90% oxygen.

7. The process according to any one of claims 1 to 6, wherein the first or second hydrogen-rich gaseous stream feeds one or more of the following apparatuses: a steam production and/or superheating furnace; one or more burners of a primary steam reformer; or one or more furnaces for pre-heating the charge of an autothermal reformer or partial oxidation reactor or natural-gas desulphurization section.

8. The process according to any one of claims 1 to 7, wherein: a purge gas of the ammonia synthesis process, containing hydrogen and methane, is treated so as to recover the hydrogen contained in the purge gas, obtaining a hydrogen-rich gas and a tail gas containing methane; and wherein at least part of the tail gas is recycled and subjected to the step (i) of conversion of the natural gas into synthesis gas.

9. The process according to any one of claims 1 to 8, wherein a part of the COz-depleted synthesis gas is treated in a unit for separation of nitrogen, thereby obtaining a first stream of nitrogen-depleted synthesis gas and a second nitrogen-enriched stream; and wherein at least part of the nitrogen-depleted synthesis gas is used as fuel and any remaining part of the nitrogen-depleted synthesis gas is fed to the ammonia synthesis unit together with the second nitrogen-enriched stream.

10. The process according to any one of claims 1 to 9, further comprising a step of expansion, with production of mechanical work, of the COz-depleted synthesis gas, after heating the CO₂-depleted synthesis gas.

11. The process according to any one of claims 1 to 10, wherein the overall steam/carbon ratio in the conversion step is greater than 2.0, more in particular wherein the overall steam/carbon ratio in the conversion step is greater than 2.4, even more in particular, wherein the overall steam/carbon ratio in the conversion step is greater than 2.7.

12. The process according to any one of claims 1 to 11, wherein the first or second hydrogen-rich gaseous stream forms all of the fuel of the furnaces used in the conversion section, and, optionally, wherein an amount of natural gas is provided as trim fuel, the trim fuel accounting for not more than 15% of the total combustion heat; or
wherein the first or second hydrogen-rich gaseous stream is produced in excess with respect to the fuel necessary for the conversion section, the quantity of the first or second hydrogen-rich gaseous stream exceeding that required as fuel being exported from the process; and regulation of the conversion section is performed by modulating the quantity of the first or second hydrogen-rich gas directed towards the conversion section and the quantity exported from the process.

13. The process according to any one of claims 1 to 12, wherein the conversion of the natural gas charge into synthesis gas includes a step of autothermal reforming, or a step of partial oxidation, the step of autothermal reforming or partial oxidation is performed with a steam/carbon ratio not greater than 2; or
wherein the conversion of the natural gas into synthesis gas includes primary reforming of the natural gas in the presence of steam and secondary reforming performed with the oxygen flow or enriched air.

14. A method for revamping a plant for synthesis of ammonia from natural gas or ammonia/urea plant, wherein the plant includes a conversion section that includes a primary steam reformer and an air-fired secondary reformer, and a section for treatment of the synthesis gas by a shift reaction of carbon monoxide into carbon dioxide, and a CO₂ removal unit; the method comprising:
* providing a flow of enriched air or oxygen and using the flow as oxidant, instead of air, for the secondary reformer or substituting the primary steam reformer for a fire heater and substituting the air-fired secondary reformer for an autothermal reformer fired with oxygen-enriched air or oxygen, wherein the fire heater is located upstream the autothermal reformer and in fluid communication with the autothermal reformer;
* providing a first membrane for separation of H₂ from CO and CO₂ in a first synthesis gas through permeation over the first membrane, the first synthesis gas containing hydrogen, CO and CO₂ and obtained from the conversion section, thus obtaining a first hydrogen-rich gaseous stream and a first hydrogen-depleted gaseous flow; and/or providing a second membrane for separation of H₂ from a second synthesis gas, the second synthesis gas obtained by the shift reaction, thus obtaining a second hydrogen-rich gaseous stream and a second hydrogen-depleted gaseous flow; and
* providing a fluid communication for feeding at least part of the first or second hydrogen-rich gaseous flow as fuel to at least one furnace in the conversion section.

15. The method according to claim 14, further comprising installing an air separation unit so as to provide the oxygen or enriched air flow, wherein the separation unit also provides a nitrogen flow which is added to the COz-depleted synthesis gas in order to obtain the desired H₂ /N₂ ratio for the ammonia synthesis unit.

16. The method according to claim 14 or 15, further comprising inserting, if not already present, a methanation unit downstream of the CO₂ removal unit.

17. An ammonia production plant comprising:
• a conversion section for converting of a charge of desulphurized natural gas and steam, with oxygen-enriched air or with oxygen, into a first synthesis gas, the first synthesis gas containing hydrogen, CO and CO₂, wherein the conversion section comprises at least one furnace;
• a treatment section for treating the first synthesis gas and including at least
∘ a shift conversion unit for reacting the carbon monoxide present in the first synthesis gas into CO₂, thereby obtaining a second synthesis gas; and
∘ a separator downstream of the shift conversion unit for separating the CO₂ from the second synthesis gas;
wherein the ammonia production plant further comprises:
• a first membrane for separating hydrogen from the first synthesis gas, thus obtaining a first hydrogen-rich gaseous stream and a first hydrogen-depleted gaseous flow, and/or a second membrane for separating hydrogen from the second synthesis gas, thus obtaining a second hydrogen-rich gaseous stream and a second hydrogen-depleted gaseous flow; and
• a fluid communication between the first or second hydrogen-rich gaseous flow and at least one furnace in the conversion section.
